# EUROPÄISCHE PATENTSCHRIFT

(11) **EP 2 454 571 B1**
(45) Veröffentlichungstag und Bekanntmachung des Hinweises auf die Patenterteilung: **30.08.2017**
(21) Anmeldenummer: 10728246.9
(22) Anmeldetag: 05.07.2010
(51) Int. Cl.: G01K 1/20, G01K 7/18, G01N 27/22

(54) **SENSORELEMENT ZUR BESTIMMUNG MINDESTENS EINER PHYSIKALISCHEN MESSGRÖßE**
SENSOR ELEMENT FOR DETERMINING AT LEAST ONE PHYSICAL MEASUREMENT VARIABLE
ÉLÉMENT DE DÉTECTION POUR DÉTERMINER AU MOINS UNE GRANDEUR PHYSIQUE

(30) Priorität: 15.07.2009 DE 102009027733
(43) Veröffentlichungstag der Anmeldung: 23.05.2012
(73) Patentinhaber: Innovative Sensor Technology IST AG, 9630 Wattvil (CH)
(72) Erfinder: BÜRGLER, Thomas, CH-9620 Lichtensteig (CH); RAVIZZA, Alan, CH-8500 Frauenfeld (CH)
(74) Vertreter: Andres, Angelika Maria
(86) Internationale Anmeldenummer: PCT/EP2010/059587
(87) Internationale Veröffentlichungsnummer: WO 2011/006793

(56) Entgegenhaltungen:
- EP-A1- 0 801 302
- EP-A2- 0 356 682
- JP-A- 8 145 798
- JP-A- S55 120 003
- US-A- 4 937 552
- US-B1- 6 787 047

## Beschreibung

Die vorliegende Erfindung betrifft ein Sensorelement zur Bestimmung der Temperatur und/oder der Feuchte und/oder des Druckes und/oder der Strömungsgeschwindigkeit eines Mediums und/oder einer Gaskonzentration, mit einem wärmeleitfähigen, flächigen Substrat, auf dessen einer Seitenfläche ein für die mindestens eine Messgröße sensitives Element vorgesehen ist. Bei dem für die Messgröße sensitiven Element handelt es sich beispielsweise um einen Feuchtesensor, einen Temperatursensor, einen Drucksensor, einen Gassensor oder einen Strömungssensor. Das für die mindestens eine Messgröße sensitive Element umfasst in Abhängigkeit der zu bestimmenden Messgrößen nur einen Sensor oder mehrere Sensoren, beispielsweise eine Kombination aus einem oder mehreren Feuchtesensoren und einem oder mehreren Temperatursensoren.

Zur Bestimmung der Luftfeuchte werden meist kapazitive Sensoren verwendet. Es können jedoch auch resistive oder optische Sensoren zum Einsatz kommen. Kapazitive Sensoren enthalten ein feuchtesensitives Dielektrikum, beispielsweise ein Polymer, sodass das vom Sensor gelieferte elektrische Signal von der Umgebungsfeuchte abhängt.

Da die Dielektrizitätskonstanten der gebräuchlichen Materialien auch eine Temperaturabhängigkeit aufweisen, ist in unmittelbarer Nähe zum kapazitiven Feuchtesensor meist ein Temperatursensor angebracht, mit dessen Werten die Messwerte des Feuchtesensors abgeglichen werden können. Um eine gute Wärmekopplung zwischen Temperatur- und Feuchtesensor zu erhalten, befinden sich beide Sensoren auf demselben Substrat, welches eine hohe Wärmeleitfähigkeit besitzt. Eine solche Kombination aus kapazitivem Feuchtesensor und einem als mäanderförmige Platinstruktur ausgestalteten Temperatursensor ist Gegenstand der Offenlegungsschriften DE 40 35 371 A1 und US 6,787,047 B1. Ebenfalls bekannt ist ein Sensor, in welchem ein kapazitiver Feuchtesensor und ein resistiver Temperatursensor übereinander in einer sandwichartigen Konstruktion angeordnet sind. Solch ein Sensor wird von der Anmelderin unter dem Namen P14 SMD Thermo hergestellt und vertrieben.

Derartige Sensoren kommen zum Beispiel in der Meteorologie zum Einsatz.

Ein Nachteil dieser Sensoren besteht darin, dass das Substrat in Wärme umgewandelte Energie aus Strahlung, welche auf die Substratoberfläche auftrifft, an den Temperatursensor weiterleitet, was zu einem Messfehler in der Temperaturbestimmung führt. Dieser Nachteil kommt insbesondere bei der Verwendung der zuvor beschriebenen Sensoren in meteorologischen Ballons zum Tragen, welche starker UV- und IR-Strahlung ausgesetzt sind.

Die Aufgabe der Erfindung besteht darin, eine Vorrichtung bereit zu stellen, mit welcher die Messgenauigkeit von Sensorelementen zur Bestimmung mindestens einer physikalischen Messgröße erhöht wird.

Die Aufgabe wird gemäß Anspruch 1 dadurch gelöst, dass diejenige Seitenfläche des Substrats, welche dem für die mindestens eine Messgröße sensitiven Element abgewandt ist, durch eine Vorbehandlung geglättet ist und dass auf der geglätteten Seitenfläche des Substrats eine Strahlung reflektierende Schicht aufgebracht ist. Durch die reflektierende Schicht wird vermieden, dass Strahlung vom Substrat absorbiert und in Wärme umgewandelt wird. Hierdurch erhöht sich beispielsweise die Genauigkeit der Feuchtebestimmung. Indem die Oberfläche der Seitenfläche des Substrats, auf welcher sich die reflektierende Schicht befindet, geglättet ist, wird eine gute Reflektivität der Schicht gewährleistet.

In dem erfindungsgemäßen Sensorelement ist eine UV-und IR-Strahlung reflektierende Schicht auf der Seitenfläche des Substrats, welche der das für die mindestens eine Messgröße sensitive Element tragenden Seite abgewandt ist, aufgebracht. Die reflektierende Schicht reflektiert im Wesentlichen Strahlung im UV-und IR-Bereich des Spektrums, da diese die Hauptquelle einer unerwünschten Erwärmung des Substrats darstellt. Das Auftragen der reflektierenden Schicht erfolgt bevorzugt in einem Dünnschichtverfahren, beispielsweise durch Aufdampfen oder Sputtern. Die reflektierende Schicht ist hierbei in einer oder in mehreren Schichten aufgetragen. Die Dicke der reflektierenden Schicht ist hierbei so gewählt, dass die Reflektivität gewährleistet ist und die zur Erwärmung des Substrats führende Strahlung nicht absorbiert werden kann. Bei Metallen wie zum Beispiel Cr wird nahezu das komplette Strahlungsspektrum der Sonne absorbiert. Liegt das Metall jedoch in Form einer dünnen Schicht vor, so wird auf Grund der geringen Schichtdicke nur wenig Wärmestrahlung absorbiert. In der Kombination des Substrats mit der reflektierenden Schicht überwiegt die Reflexion der Absorption. Es hat sich gezeigt, dass beispielsweise eine 100 nm dicke Chromschicht und eine 50 nm dicke Goldschicht zu einer guten Reflektivität führen.

Auf derjenigen Substratseitenfläche, auf der das mindestens eine für die Messgröße sensitive Element aufgebracht ist, befindet sich auf Grund deren Herstellungsverfahrens bereits eine glatte und reflektierende Schicht. Beispielsweise stellen Dielektrikum und Deckelektrode des kapazitiven Feuchtesensors bei dem erfindungsgemäßen Sensorelement solch eine reflektierende Schicht dar.

Auf Grund der guten reflektiven Eigenschaften besteht die reflektierende Schicht bevorzugt aus einem Chrom-Gold-Schichtaufbau oder aus Silber. Es versteht sich von selbst, dass beliebige reflektierende Materialien zum Einsatz kommen können. Ein Maß für den Anteil an von der Oberfläche absorbierter UV- und IR-Strahlung wird durch den Absorptionsfaktor gegeben. Dieser beträgt für Silber 0,07 im IR und 0,06 im UV Bereich, verglichen mit 0,5 (IR) und 0,11-0,2 (UV) im Fall eines Aluminiumoxid-Substrats, so dass der Einfluss von UV- und IR-Strahlung auf die Temperaturbestimmung deutlich verringert wird.

In einer Weiterbildung des erfindungsgemäßen Sensors besteht die reflektierende Schicht aus einer Chromschicht mit einer Dicke ≤ 100nm und aus einer Goldschicht mit einer Dicke ≤ 50nm.

In einer Ausgestaltung der erfindungsgemäßen Lösungen ist die Oberfläche des Substrats auf der dem für die mindestens eine Messgröße sensitiven Element abgewandten Seitenfläche vorbehandelt, sodass die Oberfläche glatt ist. Sie ist bevorzugt poliert, insbesondere geläppt. Die Vorbehandlung kann aber auch im Aufbringen eines Lackes, bevorzugt einem Polymer, bestehen, welcher beispielsweise auf das Substrat aufgeschleudert wird. Wie bereits zuvor erwähnt, wird auf diese Weise eine gute Reflektivität der aufgebrachten reflektierenden Schicht gewährleistet. Glatt bedeutet in diesem Zusammenhang, dass die Oberflächenkenngröße (SN EN ISO 4287) einen Wert kleiner Ra 0,8 annimmt. Erfindungsgemäß handelt es sich bei dem für die mindestens eine Messgröße sensitiven Element um einen kapazitiven Feuchtesensor mit einem Polymer als Dielektrikum. Bei einem für die Temperatur sensitiven Element handelt es sich vorteilhaft um einen Widerstand, der bevorzugt in Mäanderform auf dem Substrat aufgebracht ist. Der Temperatursensor ist bevorzugt aus Platin gefertigt. Bevorzugt sind Feuchtesensor und Temperatursensor mit Hilfe der Dünnschichttechnologie auf einem im thermischen Ausdehnungskoeffizienten an denjenigen des Widerstands des Temperatursensors angepassten Substrat aufgebracht.

In einer weiteren Ausgestaltung der erfindungsgemäßen Lösungen sind ein Temperatursensor und ein Feuchtesensor übereinander in einer Sandwichkonstruktion auf dem Substrat angeordnet. Ein Sensorelement mit einem Temperatursensor und einem Feuchtesensor, das die Sandwichkonstruktion als solche zeigt, wird von der Anmelderin bereits hergestellt und unter dem Namen P14 SMD Thermo vertrieben. Diese Anordnung in Verbindung mit der erfindungsgemäßen Lösung hat den Vorteil, dass auf Grund der gering gehaltenen thermischen Masse des Sensorelements die Genauigkeit in der Temperaturmessung hoch und die Ansprechzeiten des Feuchtesensors und des Temperatursensors kurz sind. Zudem werden beide Sensoren durch die vom Dielektrikum und der Deckelektrode gebildeten reflektierenden Schicht vor Strahlung geschützt. Bei der Anordnung von Temperatursensor und Feuchtesensor nebeneinander wäre es denkbar, den Temperatursensor durch eine zusätzlich über diesem aufgebrachte reflektierende Schicht zu schützten. Ein derartig ausgestaltetes Sensorelement eignet sich insbesondere für den Einsatz in Wetterballons.

In einem Ausführungsbeispiel werden die elektrischen Messgrößen über Drahtleiter abgegriffen, die mit dem Substrat über Kontaktierungsflächen verbunden sind.

Ein weiteres Ausführungsbeispiel sieht die Bereitstellung von Kontaktierungsflächen in SMD-Technik vor.

In einer weiteren Weiterbildung der Erfindung enthält das Sensorelement eine Fotodiode, welche die Intensität von UV- und/oder IR-Strahlung zu messen vermag. Insbesondere in meteorologischen Anwendungen stellt die Intensität
der UV- und IR-Strahlung eine zusätzlich zur Temperatur und Feuchte interessierende Messgröße dar. Anhand der Messwerte der Fotodiode kann darüber hinaus die Notwendigkeit der Glättung der Substratoberfläche bzw. der Strahlung reflektierenden Schicht geprüft werden.

Bei einer Weiterbildung der Erfindung weist das Material des Substrats eine Bandlücke von > 5 eV auf. Durch die Wahl eines Substratmaterials -Isolator oder Halbleiter- mit solch einer Bandlücke wird erreicht, dass Strahlung mit einer Energie unterhalb der Energie der Bandlücke nicht absorbiert werden kann und folglich nicht zur Erwärmung des Substrats führt. Beispielsweise wird von einem Substrat aus Siliziumdioxid auf Grund der Bandlücke von 8,9 eV nur Strahlung absorbiert, dessen Wellenlänge unterhalb von 140 nm liegt. UV-A und UV-B Strahlung liegt in einem Wellenlängenbereich von ca. 280 nm bis 380 nm und wird somit nicht vom Siliziumdioxidsubstrat absorbiert. Ähnliche Betrachtungen können für weitere Substratmaterialien wie Aluminiumoxid oder Zirkoniumoxid angestellt werden.

Die Erfindung wird anhand einiger Ausführungsbeispiele in nachfolgenden Figuren näher erläutert.

Es zeigt:
- Fig. 1: eine schematische Darstellung des Sensorelements mit je einem Temperaturund Feuchtesensor in Sandwichanordnung in Draufsicht;
- Fig. 2: eine schematische Darstellung des Sensorelements mit je einem Temperaturund Feuchtesensor in Sandwichanordnung in Seitenansicht;
- Fig. 3: eine schematische Darstellung des Sensorelements, wobei Temperatursensor und Feuchtesensor nebeneinander angeordnet sind, in Draufsicht;
- Fig. 4: eine schematische Darstellung des Sensorelements, wobei Temperatursensor und Feuchtesensor nebeneinander angeordnet sind, in Seitenansicht;

Im Folgenden werden Ausführungsbeispiele von einem kombinierten Temperatur- und Feuchtesensor dargelegt. Es versteht sich von selbst, dass die reflektierende Schicht, sowie das UV- und IR-Strahlung reflektierende Substrat, auch in Kombination nur mit einem Temperatursensor, nur mit einem Feuchtesensor oder mit weiteren für die jeweils zu bestimmenden physikalischen Messgrößen sensitiven Elementen Verwendung findet.

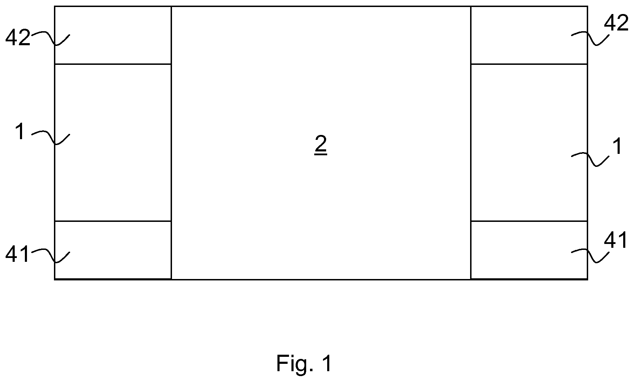

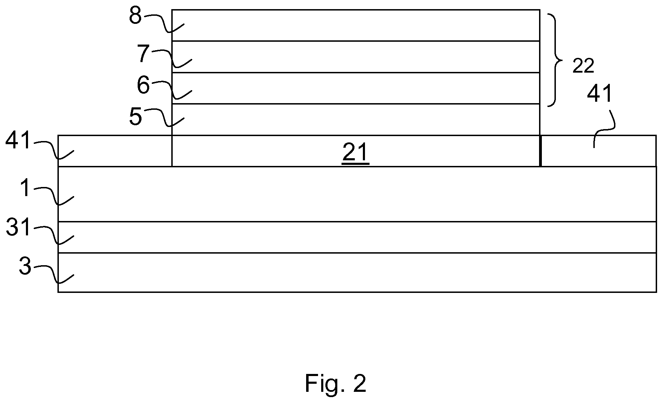

In Fig. 1 und Fig. 2 ist eine Ausführungsform des erfindungsgemäßen Sensorelements mit einer Strahlung reflektierenden Schicht schematisch dargestellt. Es handelt sich um ein monolithisches Sensorelement, d.h. die reflektierende Schicht ist Teil des Sensorelements und nicht nachträglich, z.B. durch Aufkleben, aufgebracht. Auf einem Substrat 1 ist ein für Temperatur und Feuchte sensitives Element 2 in Form eines kombinierten Temperatur- und Feuchtesensors aufgebracht.

Da der Feuchtesensor 22 temperaturabhängige Ergebnisse liefert, ist dieser mit einem Temperatursensor 21 kombiniert, welcher sich in unmittelbarer Nähe zu dem Feuchtesensor 22 befindet. Auf diese Weise können die Messwerte abgeglichen und eine bessere Genauigkeit in der Bestimmung der Feuchtigkeit erzielt werden.

In dieser Ausgestaltung sind Temperatursensor 21 und Feuchtesensor 22 übereinander in einer Sandwichkonstruktion angeordnet, wie sie beispielsweise auch beim P14 SMD Thermo, der von der Anmelderin vertrieben wird, genutzt wird. Es versteht sich von selbst, dass auch die Anordnung von Temperatursensor 21 und Feuchtesensor 22 nebeneinander möglich ist. Die Anordnung der beiden Sensoren übereinander bietet auf Grund der Kompaktheit des Sensorelements den Vorteil, dass dessen thermische Masse gering gehalten wird und dadurch die Ansprechzeiten kurz sind.

Bei dem Temperatursensor 21 handelt es sich in diesem Fall um einen mäanderförmigen Platin-Widerstand, dessen Kenngröße sich mit der Temperatur ändert. In einer anderen Ausgestaltung des Sensorelements können für den Temperatursensor 21 auch andere Materialien zum Einsatz kommen. Durch die Mäanderform erhöht sich der Widerstand der Platinstruktur. Dies führt dazu, dass der Widerstand der Zu- und Ableitungen relativ zum Widerstand des Platinelements beim Auslesen des Temperatursensors 21 vernachlässigbar gering ist, wodurch die Messgenauigkeit gesteigert wird.

Der Feuchtesensor 22 ist in diesem Ausführungsbeispiel in Form eines Kondensators realisiert. Zwischen der Grundelektrode 6 und der Deckelektrode 8 des Kondensators befindet sich ein Polymer als Dielektrikum 7. Das Dielektrikum 7 ist feuchteabhängig, sodass sich aus der Kapazität des Kondensators die vorherrschende Feuchte bestimmen lässt. Temperatursensor 21 und Feuchtesensor 22 sind in diesem Fall mit einem Verfahren der Dünnschichttechnologie auf dem Substrat 1 aufgebracht. Als Substrat 1 eignet sich besonders Aluminiumoxid, da dessen thermischer Ausdehnungskoeffizient demjenigen von Platin nahe kommt.

In dieser Ausführung befinden sich zum Abgreifen der Signale zu beiden Seiten des Sensors je eine Kontaktierungsfläche 41 des Temperatursensors und eine Kontaktierungsfläche 42 des Feuchtesensors. Die Kontaktierungsflächen 41,42 können sowohl in SMD-Technik als auch für die Durchsteckmontage als bedrahtete Variante ausgestaltet sein. Kontaktierungsflächen in SMD-Technik sind ebenso bekannt wie die bedrahtete Variante und werden hier nicht näher erläutert. Es sei jedoch erwähnt, dass bereits genanntes Sensorelement P14 SMD Thermo der Anmelderin in SMD-Technik bereits vertrieben wird.

Die dem Feuchtesensor 22 und dem Temperatursensor 21 abgewandte Seite des Substrats ist mit einer Strahlung reflektierenden Schicht 3 versehen. Insbesondere UV- und IR-Strahlung werden hierdurch daran gehindert, das Substrat aufzuheizen. Auf diese Weise wird die Genauigkeit in der Bestimmung von Temperatur und Feuchte erhöht. Bei der reflektierenden Schicht handelt es sich in diesem Beispiel um eine Goldschicht 3. Zwischen dieser Goldschicht 3 und dem Substrat 1 ist zur Haftvermittlung eine Chromschicht 31 aufgebracht. Es versteht sich von selbst, dass an Stelle von Gold auch andere Materialien verwendet werden können, die eine gute Reflektivität aufweisen. Die Zwischenschicht zur Haftvermittlung kann dabei ebenfalls aus einem anderen Material bestehen oder ganz entfallen. Reflektierende Schicht und Zwischenschicht sind in diesem Fall durch Aufdampfen auf die Substratoberfläche aufgebracht worden. Es können aber auch andere Methoden der Dünnfilmtechnik wie zum Beispiel Sputtern zum Einsatz kommen. Die Dicke des Schichtaufbaus beträgt hier etwa 100 nm, kann in anderen Ausgestaltungen jedoch variieren.

Um die Reflexionseigenschaften der reflektierenden Schicht nutzen zu können wurde die Substratoberfläche vor dem Aufbringen der Schicht geglättet. Dies geschieht beispielsweise durch Polieren, insbesondere durch Läppen der Oberfläche, womit eine Oberflächenkenngröße nach SN EN ISO 4287 von bis zu 0,012 erzielt werden kann.

Im Folgenden soll der Schichtaufbau von Temperatursensor 21 und Feuchtesensor 22 anhand von Fig.2 näher beschrieben werden.
Der Temperatursensor 21 befindet sich direkt auf dem Substrat 1. Er wird durch eine Passivierung 5 von der Grundelektrode 6 des kapazitiven Feuchtesensors 22 getrennt. Zwischen dieser und der feuchtedurchlässigen Deckelektrode 8 befindet sich das Dielektrikum 7. Die beiden Kontaktierungsstellen 41 für den Temperatursensor und die beiden Kontaktierungsstellen 42 für den Feuchtesensor sind neben der Sandwichkonstruktion auf der Substratoberfläche angeordnet.
Die dem Temperatursensor 21 und dem Feuchtesensor 22 abgewandte Seitenfläche des Substrats 1 ist geglättet und mit einer Strahlung reflektierenden Schicht 3 versehen. In diesem Fall ist noch eine Zwischenschicht 31 zur Haftvermittlung zwischen Substrat 1 und reflektierender Schicht 3 aufgebracht. Die Zwischenschicht 31 ist je nach Material des Substrats 1 und der reflektierenden Schicht 3 nicht zwingend notwendig und entfällt wenn die Haftung auch ohne die Zwischenschicht 31 gewährleistet ist.

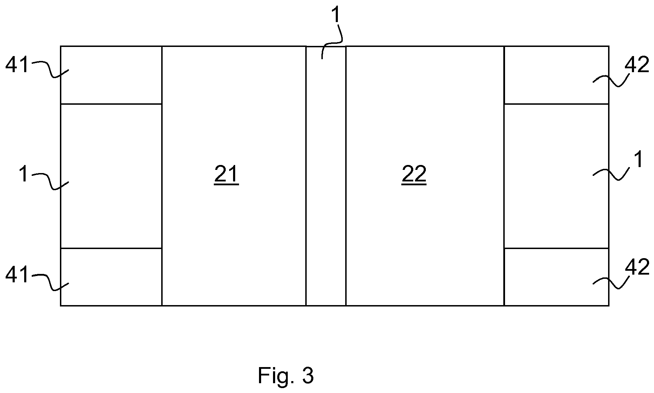

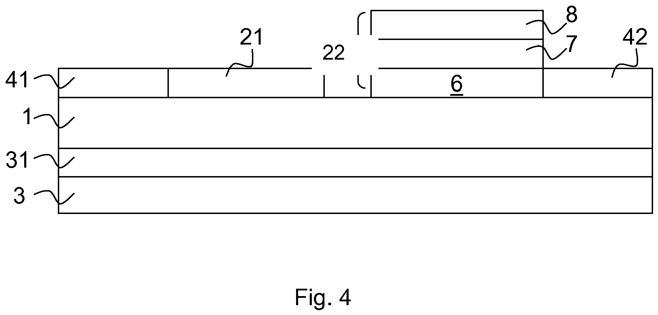

Fig. 3 und Fig. 4 zeigen schematisch eine alternative Anordnung des Temperatursensors 21 und des Feuchtesensors 22. In diesem Ausführungsbeispiel sind Temperatursensor 21 und Feuchtesensor 22 nebeneinander auf dem Substrat 1 angeordnet. Die den Feuchtesensor 22 bildenden Elemente, Grundelektrode 6, Dielektrikum 7 und Deckelektrode 8, sind hierbei übereinander angeordnet.

### Bezugszeichenliste

- 1: Substrat
- 2: Für mindestens eine Messgröße sensitives Element
- 21: Temperatursensor
- 22: Feuchtesensor
- 3: Reflektierende Schicht
- 31: Haftvermittelnde Zwischenschicht
- 4: Kontaktierungsflächen mit Drahtleitern
- 41: Kontaktierungsflächen für den Temperatursensor
- 42: Kontaktierungsflächen für den Feuchtesensor
- 5: Passivierung
- 6: Grundelektrode des Feuchtesensors
- 7: Dielektrikum des Feuchtesensors
- 8: Deckelektrode des Feuchtesensors

## Patentansprüche

1. Sensorelement zur Bestimmung der Feuchte eines Mediums, mit einem wärmeleitfähigen flächigen Substrat (1), auf dessen einer Seitenfläche ein für die mindestens eine Messgröße sensitives Element (2) vorgesehen ist, wobei diejenige Seitenfläche des Substrats (1), welche dem für die mindestens eine Messgröße sensitiven Element (2) abgewandt ist,
durch eine Vorbehandlung geglättet ist, wobei es sich bei dem für die mindestens eine Messgröße sensitiven Element (2) um einen kapazitiven Feuchtesensor (22) mit einem Polymer als Dielektrikum (7) handelt, **dadurch gekennzeichnet, dass** auf der geglätteten Seitenfläche des Substrats (1) eine UV- und IR-Strahlung reflektierende Schicht (3) aufgebracht ist, sodass eine Absorption von Strahlung durch das Substrat und deren Umwandlung in Wärme vermieden ist.

2. Sensorelement nach Anspruch 1,
**dadurch gekennzeichnet,**
**dass** die reflektierende Schicht (3) aus einer Chrom-Goldschicht oder aus Silber besteht.

3. Sensorelement nach Anspruch 2,
**dadurch gekennzeichnet,**
**dass** die reflektierende Schicht (3) aus einer Chromschicht mit einer Dicke ≤ 100nm und aus einer Goldschicht mit einer Dicke ≤ 50nm besteht.

4. Sensorelement nach mindestens einem der vorangehenden Ansprüche,
**dadurch gekennzeichnet,**
**dass** die reflektierende Schicht (3) aus einem UV- und IR-Strahlung reflektierenden Material in einer oder mehreren Schichten aufgetragen ist.

5. Sensorelement nach mindestens einem der Ansprüche 1-4,
**dadurch gekennzeichnet,**
**dass** die Oberfläche des Substrats (1) auf der dem für die mindestens eine Messgröße sensitiven Element abgewandten Seitenfläche poliert oder durch einen aufgebrachten Lack geglättet ist.

6. Sensorelement nach mindestens einem der vorangehenden Ansprüche,
**dadurch gekennzeichnet,**
**dass** es sich bei dem Sensorelement um eine bedrahtete Ausführung handelt.

7. Sensorelement nach mindestens einem der vorangehenden Ansprüche,
**dadurch gekennzeichnet,**
**dass** es sich bei dem Sensorelement um eine SMD Ausführung handelt.

8. Sensorelement nach mindestens einem der vorangehenden Ansprüche,
**dadurch gekennzeichnet,**
**dass** das Sensorelement eine Fotodiode zur Messung von UV-und/oder IR-Strahlung enthält.

9. Sensorelement nach mindestens einem der vorangehenden Ansprüche,
**dadurch gekennzeichnet,**
**dass** das Material des Substrats (1) eine Bandlücke von > 5eV aufweist.

## Claims

1. Sensor element for determining the humidity of a medium, with a flat, thermo-conductive substrate (1), a side face of which contains an element (2) that is sensitive to the at least one measured variable,
wherein the side face of the substrate (1) that faces away from the element (2) that is sensitive to the at least one measured variable is smoothed by means of a pretreatment,
wherein the sensitive element (2) that is sensitive to the at least one measured variable is a capacitance humidity sensor (22) with a polymer as the dielectric (7), **characterized in that** a layer (3) that reflects UV or IR radiation is applied to the smoothed side face of the substrate (1) such that an absorption of radiation by the substrate and its conversion to heat is avoided.

2. Sensor element as claimed in Claim 1,
**characterized in that**
the reflecting layer (3) consists of a chrome/gold layer or of silver.

3. Sensor element as claimed in Claim 2,
**characterized in that**
the reflecting layer (3) consists of a chrome layer with a thickness ≤ 100 nm and of a gold layer with a thickness ≤ 50 nm.

4. Sensor element as claimed in at least one of the previous claims,
**characterized in that**
the reflecting layer (3) made from a material that reflects UV and IR radiation is applied in one or more layers.

5. Sensor element as claimed in at least one of the Claims 1-4,
**characterized in that**
the surface of that substrate (1) on the side face facing away from the element that is sensitive to the at least one measured variable is polished or smoothed by a varnish applied.

6. Sensor element as claimed in at least one of the previous claims,
**characterized in that**
the sensor element is a wired version.

7. Sensor element as claimed in at least one of the previous claims,
**characterized in that**
the sensor element is an SMD version.

8. Sensor element as claimed in at least one of the previous claims,
**characterized in that**
the sensor element contains a photodiode for measuring UV and/or IR radiation.

9. Sensor element as claimed in at least one of the previous claims,
**characterized in that**
the material of the substrate (1) has a band gap of > 5 eV.

## Revendications

1. Élément capteur destiné à la détermination de l'humidité d'un produit, avec un substrat (1) plan thermoconducteur, sur lequel est prévu sur l'une de ses surfaces latérales un élément (2) sensible à l'au moins une grandeur de mesure,
la surface latérale du substrat (1), laquelle est située à l'opposé de l'élément (2) sensible à l'au moins une grandeur de mesure, étant lissée au moyen d'un traitement préliminaire,
pour lequel il s'agit, concernant l'élément sensible à l'au moins une grandeur de mesure, d'un capteur d'humidité capacitif (22) avec un polymère en tant que diélectrique (7),
**caractérisé**
**en ce qu'**est appliquée, sur la surface latérale lissée du substrat (1), une couche (3) réfléchissant un rayonnement ultraviolet et infrarouge, de telle sorte qu'une absorption du rayonnement par le substrat et sa conversion en chaleur soit évités.

2. Élément capteur selon la revendication 1,
**caractérisé**
**en ce que** la couche réfléchissante (3) est constituée d'une couche en chrome-or ou en argent.

3. Élément capteur selon la revendication 2,
**caractérisé**
**en ce que** la couche réfléchissante (3) est constituée d'une couche en chrome d'une épaisseur ≤ 100 nm et d'une couche en or d'une épaisseur ≤ 50 nm.

4. Élément capteur selon au moins l'une des revendications précédentes,
**caractérisé**
**en ce que** la couche réfléchissante (3) est appliquée en une ou plusieurs couches de matériau réfléchissant le rayonnement ultraviolet et infrarouge.

5. Élément capteur selon au moins l'une des revendications 1 à 4,
**caractérisé**
**en ce que** la surface du substrat (1), sur la surface latérale située à l'opposé de l'élément sensible à au moins une grandeur de mesure, est polie ou lissée à l'aide d'une laque appliquée.

6. Élément capteur selon au moins l'une des revendications précédentes,
**caractérisé**
**en ce que**, concernant l'élément capteur, il s'agit d'une version câblée.

7. Élément capteur selon au moins l'une des revendications précédentes,
**caractérisé**
**en ce que**, concernant l'élément capteur, il s'agit d'une version CMS.

8. Élément capteur selon au moins l'une des revendications précédentes,
**caractérisé**
**en ce que** l'élément capteur contient une photodiode destinée à la mesure du rayonnement ultraviolet et/ou infrarouge.

9. Élément capteur selon au moins l'une des revendications précédentes,
**caractérisé**
**en ce que** le matériau du substrat (1) présente un écart énergétique > 5 eV.
